# EUROPEAN PATENT APPLICATION

(11) **EP 2 015 555 A1**
(43) Date of publication of application: **14.01.2009**
(21) Application number: 08165238.0
(22) Date of filing: 18.05.2004
(51) Int. Cl.: H04N 1/00

(54) **Apparatus, method and program for processing still and moving image files**

(30) Priority: 20.05.2003 JP 2003142406
(62) Divisional of application: 04252923.0
(71) Applicant: Canon Kabushiki Kaisha, Tokyo 146-8501 (JP)
(72) Inventor: Saito, Satoko, Tokyo (JP)
(74) Representative: Hitching, Peter Matthew

(57) **Abstract**

An image processing apparatus (102A) processes a still image file which includes attribute information following a format of still image file and a moving image file which includes attribute information following a format of moving image file. The processing involves acquiring a representative image data from the moving image file, the representative image data being still image data; acquiring attribute information following a format of moving image file included in the moving image file; and embedding the acquired attribute information in the acquired representative image data.

## Description

### FIELD OF THE INVENTION

This information relates to a method of uploading data to a data holding system and an apparatus thereof. More particularly, the invention relates to a method of uploading data to a data holding system and an apparatus thereof in an information processing system for holding digital image data, which is possessed by a user, in a server connected using a communication environment such as the Internet, and enabling a third party to view the held data and to order prints thereof over the Internet.

### BACKGROUND OF THE INVENTION

The building of communications infrastructure and the development of telecommunications technologies in recent years have made possible information providing services and information utilization services that utilize the Internet.

A network service that is available as one type of information providing service keeps digital image data, which a user has captured by an image input device, in a storage area of a network server and enables the user to view the digital image data and to download it when desired. Also available is a network service for providing a service that makes it possible for a user to disclose entrusted digital image data to a third party that desired the data. The provider that makes this network service available will be referred to as a "photo site" below.

Assume that a user acquires a plurality of digital images that have been captured by an image input device that is capable of taking images in both still- and moving-image formats and that the plurality of digital images includes a mixture of such still and moving images. These images have different file formats. In a case where the image data is at the time of transfer, therefore, a problem which arises is that attributes cannot be set collectively because the specified attributes differ. And then, a problem encountered is that only still images or only moving images must be uploaded on a per-file-type basis by a separate operation.

Further, when a plurality of items of data consisting of a mixture of still and moving images are selected and uploaded collectively, the still images are uploaded upon embedding so-called sensing-time information acquired at the time of sensing, such as the date and time of photography and camera-related information, in the file format as an Exchangeable Image File Format (EXIF information) based upon a common protocol employed in digital cameras of all manufacturers, and the uploaded information can be referred to on the side of the photo site at the time of viewing. However, there is no such common protocol for moving images. Therefore, information corresponding to EXIF cannot be embedded in a file of a moving image. In other words, though information prevailing at the time of sensing of a moving image has been acquired, it cannot be transferred to the photo site and therefore cannot be exploited at the photo site at the time of viewing.

### SUMMARY OF THE INVENTION

Accordingly, a concern of the present invention is to provide a method of uploading data to a data holding system and an apparatus thereof in which it is possible to collectively upload data consisting of a mixture of still and moving images.

According to the present invention there is provided a method of uploading data, comprising the steps of: selecting a plurality of items of data having different file formats; performing, to the selected items of data, processing corresponding to their file formats, respectively; and transmitting the selected items of data to a network together with respective results of the processing.

In a preferred embodiment, the processing is processing for changing first attribute information that belongs to data having a first file format to a format of second attribute information that belongs to data having a second file format. Further, this processing is processing for creating thumbnail data of data having the first file format. Further, the file formats include at least an Exchangeable Image File format. Further, the processing is at least one of processing for changing resolution of the data and processing for compressing the data.

Also provided are a program for implementing the above-described data upload method and a storage medium on which the program is stored in a form readable by an image processing apparatus.

Further, the present invention provides an information processing apparatus comprising: means adapted to select a plurality of items of data having different file formats; means adapted to perform, to the selected items of data, processing corresponding to their file formats, respectively; and mean adapted to transmit the selected items of data to a network together with respective results of the processing.

In accordance with the present invention, as described above, it is possible to provide a method of uploading data to a data holding system in which data consisting of a mixture of still and moving images can be uploaded collectively.

More specifically, information can be uploaded from a terminal connected to a computer network such as the Internet, and a transfer attribute can be set for a plurality of image files of mixed still and moving images and the files can be uploaded by a batch operation. Further, information at a time of sensing a moving image corresponding to EXIF information of a still image also can be embedded in a representative moving image in a manner similar to that of a still image and can be uploaded for reference. As a result, ease of use is afforded for uploading users and viewing users.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1 is a diagram illustrating the configuration of an overall system according to an embodiment of the present invention;
Fig. 2 is a diagram illustrating an example of the structure of a photo site according to this embodiment;
Fig. 3 is a diagram illustrating an example of the hardware implementation of a photo site according to this embodiment;
Figs. 4A and 4B are a flowchart illustrating the flow of processing performed when data is uploaded according to this embodiment;

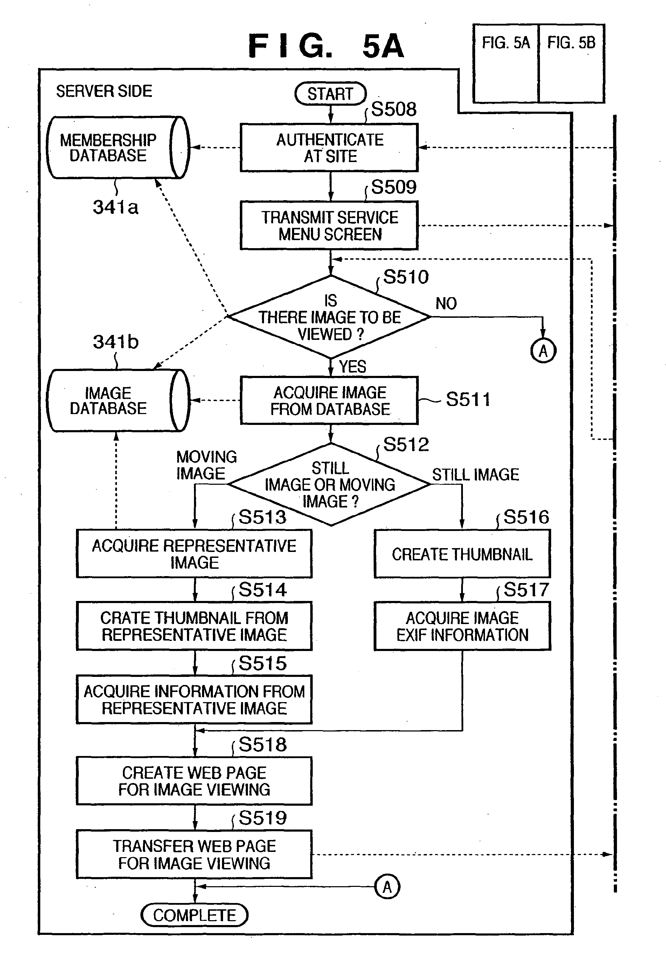

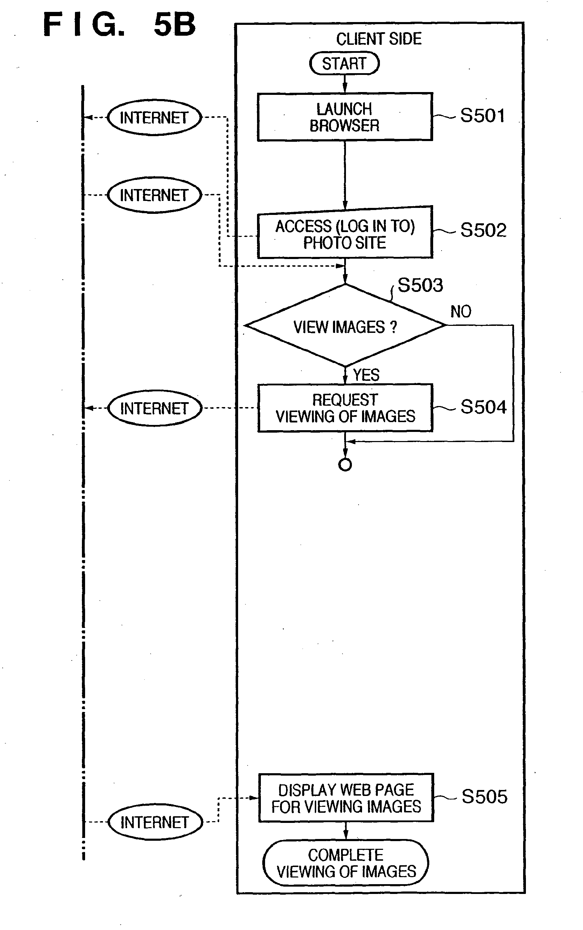

Figs. 5A and 5B are a flowchart illustrating the flow of processing performed when viewing data that has been uploaded according to this embodiment;
Fig. 6 is a diagram illustrating an example an image management screen of an application on a client side according to this embodiment;
Fig. 7 is a diagram illustrating an example an image selection screen of an application on a client side according to this embodiment;
Fig. 8 is a diagram illustrating an example of a screen, which is for accessing a server, of an application on a client side according to this embodiment;
Fig. 9 is a diagram illustrating an example of an information add-on screen of an application on a client side according to this embodiment;
Fig. 10 is a diagram illustrating an example of a still-image transfer attribute screen of an application on a client side according to this embodiment;
Fig. 11 is a diagram illustrating an example of a moving-image transfer attribute screen of an application on a client side according to this embodiment;
Fig. 12 is a diagram illustrating an example of an image viewing list according to this embodiment; and
Fig. 13 is a diagram illustrating an example of an image viewing screen according to this embodiment.

### DETAILED DESCRIPTION OF THE PREFERRED EMBODIMENT

A preferred embodiment of the present invention will now be described in detail with reference to the drawings. It should be noted that relative placement of structural elements and the display screens, etc., described in this embodiment do not limit the scope of the present invention unless specifically stated otherwise. The present invention additionally solves problems common to services that use networks.

### <Example of configuration of image uploading and viewing service system>

The object of this embodiment is to enable a user to collectively upload image data, which is a mixture of still-image and moving-image file formats, to a photo site on the Internet.

A photo site system for collectively receiving and managing image data, which is a mixture of still-image and moving-image file formats, via the Internet will be described as an embodiment of the present invention.

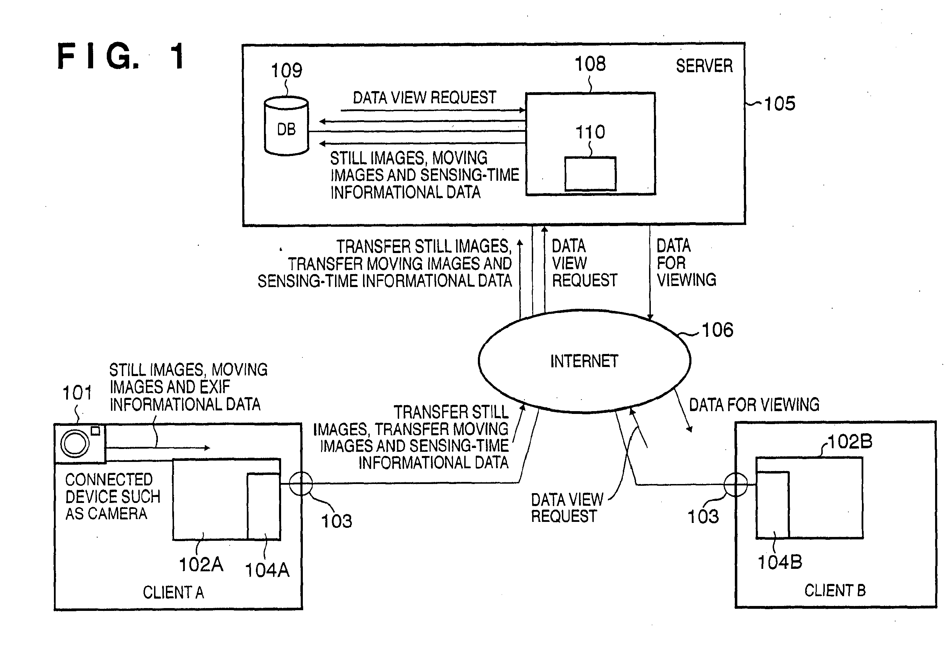

Fig. 1 is a diagram illustrating an example of the overall configuration of a system for supplying an uploading and viewing service according to this embodiment.

### (Client A: image uploader)

The system includes an image input device 101 connectable to a personal computer. The image input device 101 may be considered to be a digital camera, a digital video camera, a digital still camera or a device having multiple functions such as a digital camera capable of sensing still images and movies. Client A has a client application 104A for managing images captured by the image input device 101.

The system further includes a user personal computer (abbreviated to "user PC" below) 102A. The user PC 102A is connected to various sites on the Internet 106 via browser 103. The browser 103 operates at the user PC 102A and has a standard protocol that enables information transfer over the Internet 106, accesses a photo site 105 using the standard protocol, such as HTTP (HyperText Transfer Protocol), and displays information that is linked to multimedia information managed by a server personal computer 108 of the photo site. The multimedia information is information for reproducing images and voice, etc., created in a description language such as HTML and XML (extensible Markup Language). By virtue of this operation, the user PC 102A is capable of receiving an image uploading service, which utilizes the Internet 106 as communication infrastructure, provided by the photo site 105.

### (Client B: image viewer)

The system further includes a user PC 102B having a structure similar to that of the user PC 102A. The user PC 102B is capable of receiving an uploaded-image viewing service, which utilizes the Internet 106 as communication infrastructure, provided by the photo site 105.

According to this embodiment, the user PC 102A serving as a terminal that uploads images and the user PC 102B serving as a terminal that views uploaded images are provided separately. However, the user PCs 102A, 102B may be the same terminal and no particular limitation pertains thereto.

### (Server: photo site)

The system further includes the server computer (abbreviated to "server PC" below) 108 of the photo site, the computer being connected to the Internet 106. The server PC 108 is connected to a database 109, which holds various user data, via a network such as a LAN (Local Area Network).

The server PC 108 has a server application 110 for performing image uploading, viewing and management services in accordance with a request from the user PC 102A on the client side.

### <Example of operation of image uploading and viewing service system>

### (Image upload)

The user PC 102A is connected to the image input device 101, which is capable of sensing moving and still images, and acquires a plurality of image files in which moving images and still images are mixed. In order to receive the upload service from the photo site 105, the client application 104A starts preparations for selecting and transferring image files, which are uploaded to the photo site 105, from the local environment. Here it is assumed that the client application 104A selects a plurality of image files in which moving and still images are mixed.

Next, the client application 104A accesses the photo site 105 via the browser 103 and Internet 106 and acquires authentication information necessary to log into the photo site 105.

If it is detected that a still image is included among a plurality of image files selected so as to be uploaded, the client application 104A provides a user interface that allows the user to set a transfer attribute for the still image. The user operates the user PC 102A to create a still-image file, which is for transfer purposes, under conditions set in accordance with the user interface.

If it is detected that a moving image is included among a plurality of image files selected so as to be uploaded, then the client application 104A provides a user interface that allows the user to set a transfer attribute for the moving image. The user operates the user PC 102A to create a moving-image file, which is for transfer purposes, under conditions set in accordance with the user interface.

With regard to creation of a moving-image file for transfer purposes, this embodiment is such that the client application 104A creates a representative still image of this file from one frame of the moving image. The client application 104A embeds comments and sensing-time information (information prevailing at the time of sensing that usually corresponds to EXIF information in the file format of the still image), which is acquired from the image input device 101, in the representative still image created, thereby creating the moving-image file for transfer.

The file format of a still image usually includes the sensing-time information and a thumbnail image in a unified standard as EXIF information. However, the file format of a moving image either does not include a standard still image, sensing-time information and comments or does but in a different format.

According to this embodiment, image files of any file format, such as moving images and still images, are uploaded by the above-described processing as image files for transfer having a common format inclusive of a thumbnail image and sensing-time information. As a result, the photo site 105 is capable of managing the image files in unified fashion.

It should be noted that this embodiment is described with regard to a case where the client application 104A creates the representative still image. However, this does not impose a limitation upon the invention and it may be so arranged that the image input device 101 creates the representative still image and delivers it to the client application 104A together with the image file.

The client application 104A uploads the image files for transfer, in which still and moving images are mixed, to the photo site 105 via the Internet 106.

### (Viewing of images)

The photo site 105 acquires image files for transfer, in which still and moving images are mixed, via the Internet 106. The server application 110 analyzes the acquired image files for transfer and acquires still images, moving images, representative images of the moving images, comments regarding the images and sensing-time information. The various images and various information are saved in the database 109.

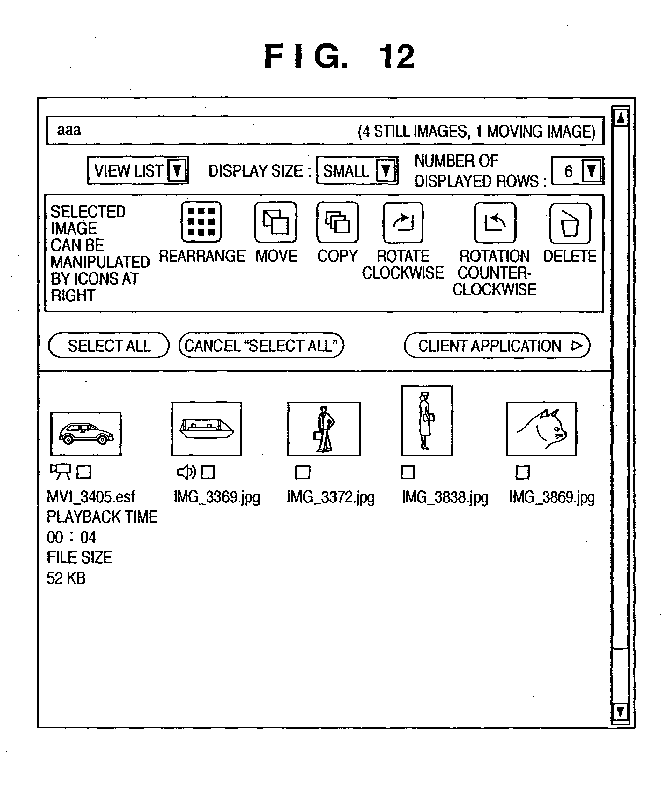

A client application 104B issues an image view request to the photo site 105 via the browser 103 and Internet 106. The photo site 105 reads various images and various information in line with the user request out of the database 109, creates image viewing list data, transmits the data to the Internet 106 and causes the image viewing list, which is of the kind shown in Fig. 12, to be displayed on the monitor of the user PC 102B.

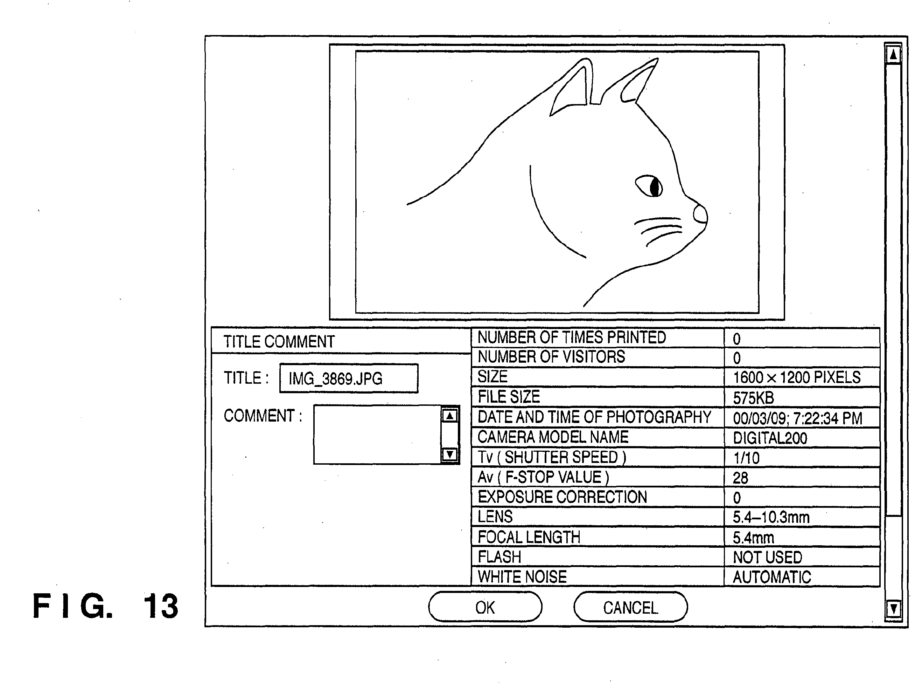

Next, by way of the browser 103, the user PC 102B displays on its monitor the image viewing list that has been distributed from the photo site 105 via the Internet 106. The browser of the user PC 102B expands the image viewing list data, reproduces images, moving images and sound information and can provide the user with a viewing service. Further, sensing-time information and comments are allowed to be viewed together with the image on an image viewing screen of the kind shown in Fig. 13.

### <Example of structure of photo site according to this embodiment>

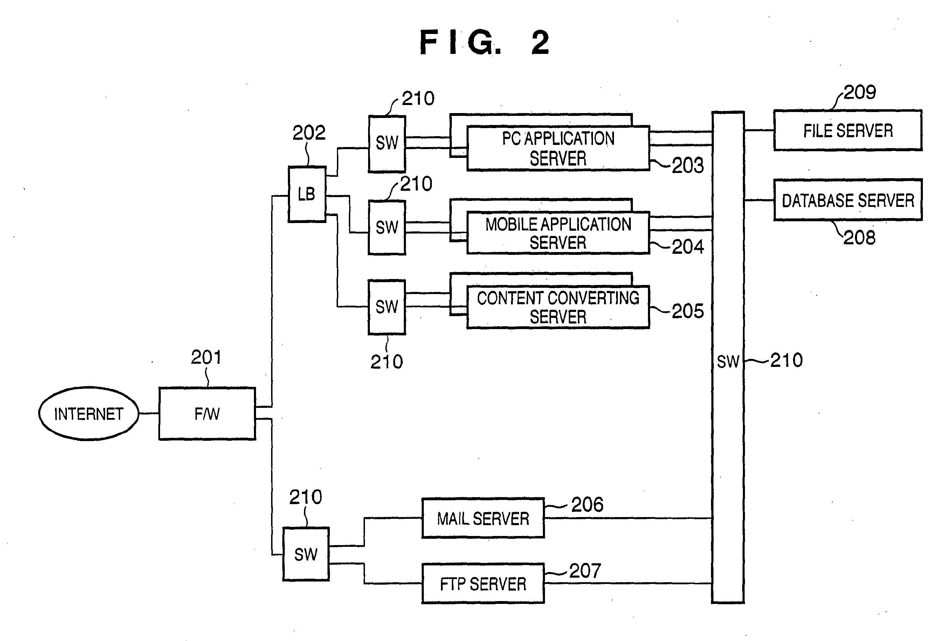

Fig. 2 is a diagram illustrating an example of the structure of the photo site 105 according to this embodiment.

The photo site 105 mainly comprises a firewall (F/W) 201, a load balancer (LB) 202, PC and mobile application servers 203, 204, respectively, a content converting server 205, a mail server 206, an FTP server 207, a database server 208, a file server 209, and an Ethernet (registered trademark) switch (SW) 210.

The firewall 201 at the photo site 105 functions to block intrusions and attacks from the outside and is used to safely operate the group of servers on the intranet within the photo site 105.

The photo site 105 primarily has the PC application server 203, which provides the personal computers with service, and the mobile application server 204, which provides the mobile terminal with service. These application servers function as WWW servers. The application servers 203, 204 acquire image information and user information in association with the database server 208 and generate a page at an appropriate time.

The load balancer 202 is a load dispersing device and has a load dispersing function for assigning access to the photo site 105 to a plurality of servers in the intranet. In addition, the load balancer 202 has a function for acquiring terminal information about the source of the access and discriminating whether a request is a view request from the mobile terminal or a view request from personal computer. In accordance with the result of discrimination, the load balancer 202 assigns the view request from the personal computer to the application server 203 and assigns the view request from the mobile terminal to the mobile application server 204 via the content converting server 205.

The application server 203 has a web page for a network image storing service that supports access from the personal computer. Further, the application server 203 provides a user web page for every user that enables each user to utilize an image acceptance service that makes it possible for each user to view images, set a password and send invitation mail for viewing.

The content converting server 205 operates as a proxy server for relaying the mobile application server 204 with respect to access from the mobile terminal. If a request is received from the mobile terminal, then the content converting server 205 relays the received request to the mobile application server 204.

In response to an indication from the application server 203, the mail server 206 transmits e-mail for confirming service registration to the user PC 102A and transmits invitation mail for image viewing to the user PC 102B.

An image from the user PC 102A is received by the FTP server 207 through the ftp protocol. Once image data has been received, the data is stored in the file server 209 that functions as main storage.

### <Example of hardware implementation of photo-site server according to this embodiment>

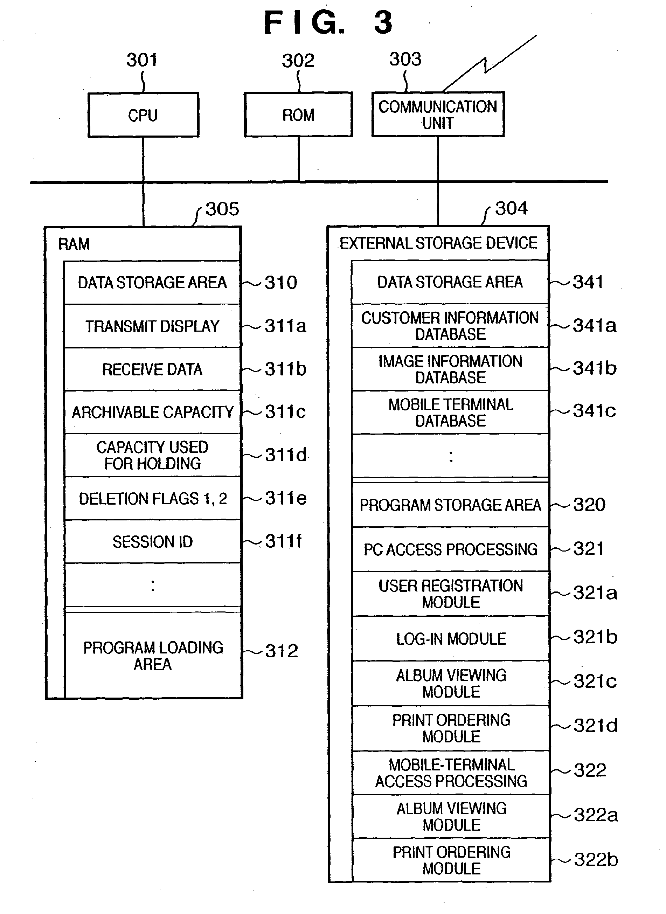

Fig. 3 is a diagram illustrating an example of the hardware implementation of the photo-site server 105 according to this embodiment. It should be noted that Fig. 3 is centered on a controller and does not illustrate input/output devices.

The photo site includes a CPU (Central Processing Unit) 301 for controlling the overall photo site 105. A program and parameters that do not require modification have been stored in a ROM (Read-Only Memory) 302. A RAM (Random-Access Memory) 305 is a storage area that stores programs and data temporarily and comprises a data storage area 310 and a program loading area 312.

A system program such as an operating system and printer driver or an application program provided by a user or the like is loaded in the program loading area 312 from an external storage device 304 and is performed by the CPU 301.

The following areas used in this embodiment are reserved in the data storage area 310: a transmit screen 311a created in order to be provided to, e.g., the user PC 102, receive data 311b received from the communication terminal of the user; image-data archivable capacity 311c used in order to check whether image data can be held; hold capacity 311d presently being used to hold image data; an area 311e for storing deletion flags 1, 2 used when viewing image data from the mobile terminal; and a session ID 311f.

The external storage device 304 includes a fixed hard disk or memory card or portable removable media such as a floppy (registered trademark) disk, a compact disk (CD) or other optical disks, a magnetic or optical card, an IC card or a memory card. The external storage device 304 comprises a data storage area 341 and a program storage area 342.

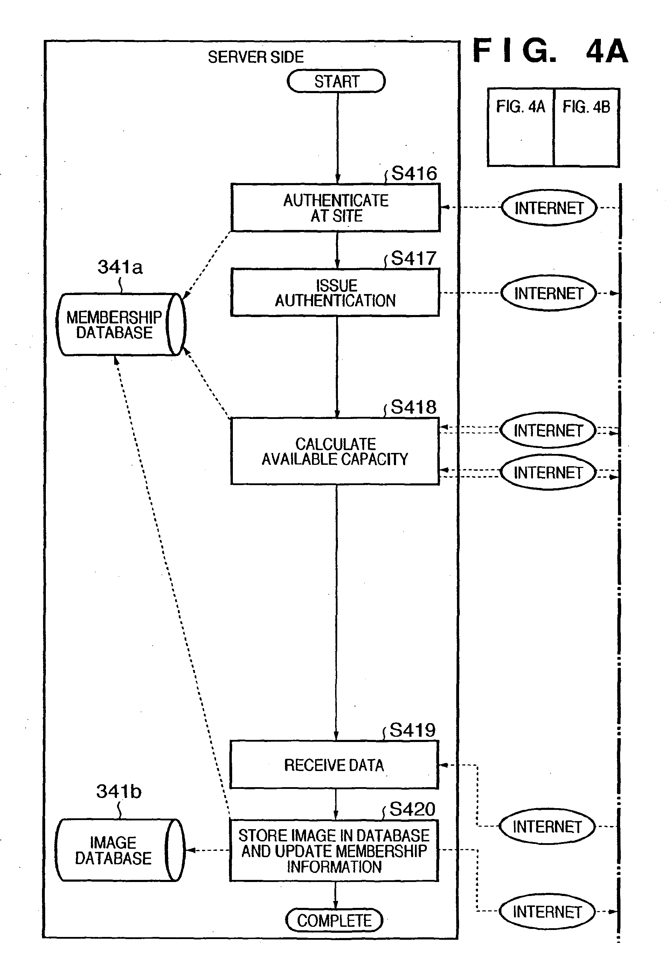

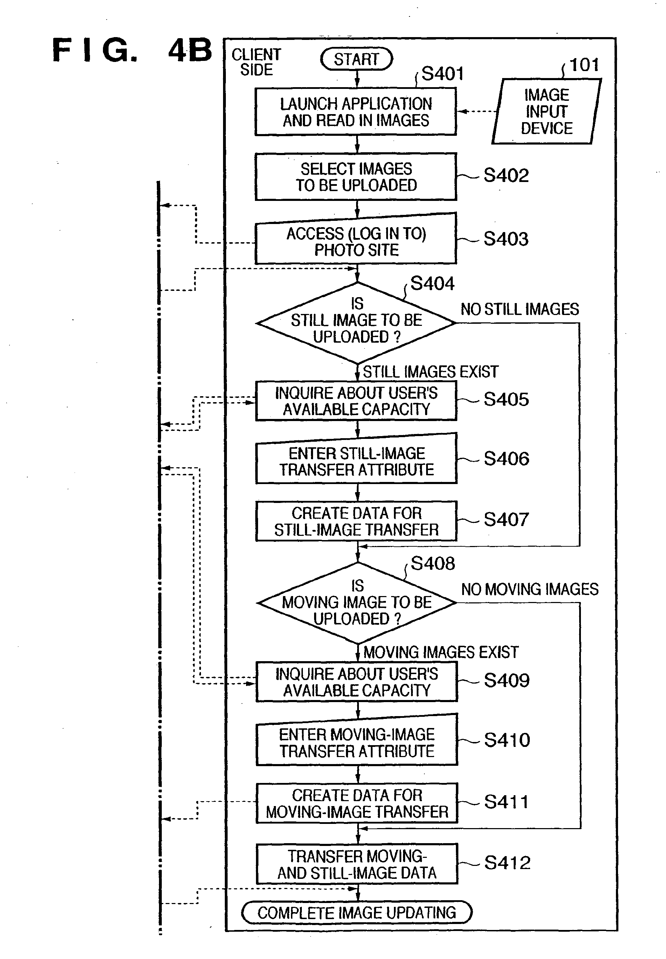

Stored in the data storage area 341 are a customer information database 341a for managing information concerning a user who has requested holding, an image information database 341b for managing image information that has been held, and a mobile terminal database 341c that manages information for a mobile terminal. These will be described in detail below in regard to one example shown in Figs. 4A and 4B.

A program loaded into the program loading area 312 of the RAM 305 and performed is stored in a program storage area 320 (the program may be performed directly by a memory card or the like). Though not illustrated in Fig. 3, a system program such as an operating system or BIOS used in this embodiment also is stored in the program storage area 320. In Fig. 3, the following are stored in the program storage area 320 as a program 321 for PC access processing: a user registration module 321a, a log-in module 321b, an album viewing module 321c and a print ordering module 321d. An album viewing module 322a, which is a characterizing feature of this embodiment, is further stored as a program 322 for mobile-terminal access processing.

In the example of the hardware configuration of the photo site described above, the hardware is illustrated in the form of a single apparatus. However, the arrangement may be in the form of a system in which each server of Fig. 2 is an independent device and all of the devices are connected by a LAN (Local Area Network). Further, storage devices, particularly the external storage device 304, may be dispersed as a plurality of devices.

### <Example of operation for uploading image files of mixed still and moving images>

Reference will be had to the flowchart of Figs. 4A and 4B to describe an example of upload of a plurality of files of mixed still and moving images according to this embodiment. Steps S401 to S412 in Fig. 4B constitute the flow of processing as seen from an application on the client side according to this embodiment. Steps S416 to S420 in Fig. 4A constitute the flow of processing as seen from the side of the photo site according to this embodiment.

A database 341a is for performing unified management of membership information that a user has registered with the photo site 105. A database 341b is for holding images uploaded from the user PC 102A to the photo-site server 105. It should be noted that this embodiment is described with regard to an example in which the photo site requires user authentication when the upload service is provided. However, whether or not registration of members is performed and authentication carried out does not represent a limitation.

First, the user on the client side operates the user PC 102A to launch the client application 104A, which manages local images captured by the image input device 101. The client application 104A acquires a plurality of images, which are a mixture of moving images and still images, from the local environment or from the image input device 101 connected to the user PC 102A (step S401). Further, it is also conceivable that the client application 104A will acquire images downloaded by the user PC 102A via the Internet 106. In this embodiment, there is no limitation with regard to a method of inputting images.

The user selects a plurality of images of interest uploaded to the photo-site server 105 and held at the photo-site server 105 from among the image files acquired by the client application 104A (step S402). According to this embodiment, it is assumed that a plurality of image files of mixed formats such as moving- and still-image formats are selected.

The user PC 102A accesses the photo-site server 105 via the Internet 106 and logs into the photo-site server 105 (step S403).

The photo-site server 105 refers to the membership database 341a and determines whether to allow provision of the upload service or not based upon whether the user of the user PC 102A seeking authentication has already been registered as a member (step S416). If the photo site-site server 105 allows provision of the upload service, then the server issues authentication (step S417).

The client application 104A starts preparations for uploading image files if provision of the upload service has been allowed.

The client application 104A investigates the plurality of image files of interest selected at step S402 and determines whether these image files include an image file of a still image (step S404). If an image file of a still image is included, then the client application 104A starts preparations for uploading the image file of the still image (steps S405 to S407). If an image file of a still image is not included among the files, then the client application 104A determines whether the files include an image file of a moving image (step S408).

According to this embodiment, it is assumed that the client application 104A judges that an image is a still image if the format of the image file is JPEG and judges that an image is a moving image if the format of the image file is MPEG. However, the criterion is not limited to this arrangement.

In order to start preparations for uploading the image file of a still image and investigating the user's available capacity at the photo-site server 105, the client application 104A queries the photo-site server 105 about the user's available capacity via the Internet 106 (step S405).

After authenticating the user, the photo-site server 105 refers to the membership database 341a managed by the photo-site server 105, calculates the user's remaining available capacity and sends a numerical value indicating the available capacity back to the client application 104A (step S418). It should be noted that although this illustrates an example of display of a user's transfer setting screen to which an available-capacity display function has been added, this embodiment has no limitation as to whether or not an available-capacity display function is provided.

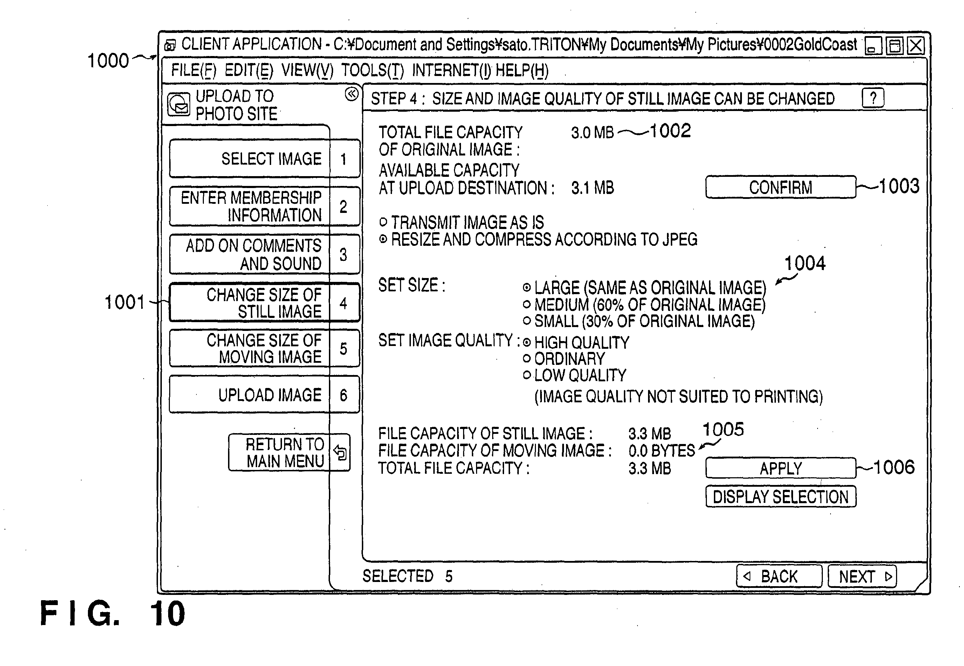

The client application 104A displays a still-image transfer attribute setting screen 1000 (Fig. 10), which is for setting a transfer attribute of an image to be uploaded, on the monitor of the user PC 102A. Further, the client application 104A displays available capacity, which has been received from the photo site 105, as a reference numerical value and prompts the user to set an appropriate transfer attribute. The user sets a transfer attribute, such as an appropriate compression rate, in accordance with the still-image transfer attribute setting screen 1000 (step S406).

In accordance with the transfer attribute set by the user at step S406, the client application 104A changes the resolution of the image file and subjects it to compression, etc., and creates a still-image file for transfer that is different from the original image file (step S407). It should be noted that sensing-time information (EXIF information) such as camera model and exposure defined by the Exchangeable Image File Format has previously been embedded in the image file of the still image within the image input device 101. Accordingly, the sensing-time information of the image is included in the transfer still-image file without performing any particular processing.

The client application 104A investigates the plurality of images selected for upload at step S402 and determines whether these image files include a moving image (step S408). If an image file of a moving image is included, then the client application 104A starts preparations for uploading the image file of the moving image (steps S409 to S411). If an image file of a moving image is not included among the files, then control proceeds to uploading of the transfer image files (step S412).

In order to start preparations for uploading the image file of a moving image and investigating the user's available capacity at the photo-site server 105, the client application 104A queries the photo-site server 105 about the user's available capacity via the Internet 106 (step S409). After authenticating the user, the photo-site server 105 refers to the membership database 341a, calculates the user's remaining available capacity and sends a numerical value indicating the available capacity back to the client application 104A (step S418). It should be noted that although this illustrates an example of display of a user's transfer setting screen to which an available-capacity display function has been added, this embodiment has no limitation as to whether or not an available-capacity display function is provided.

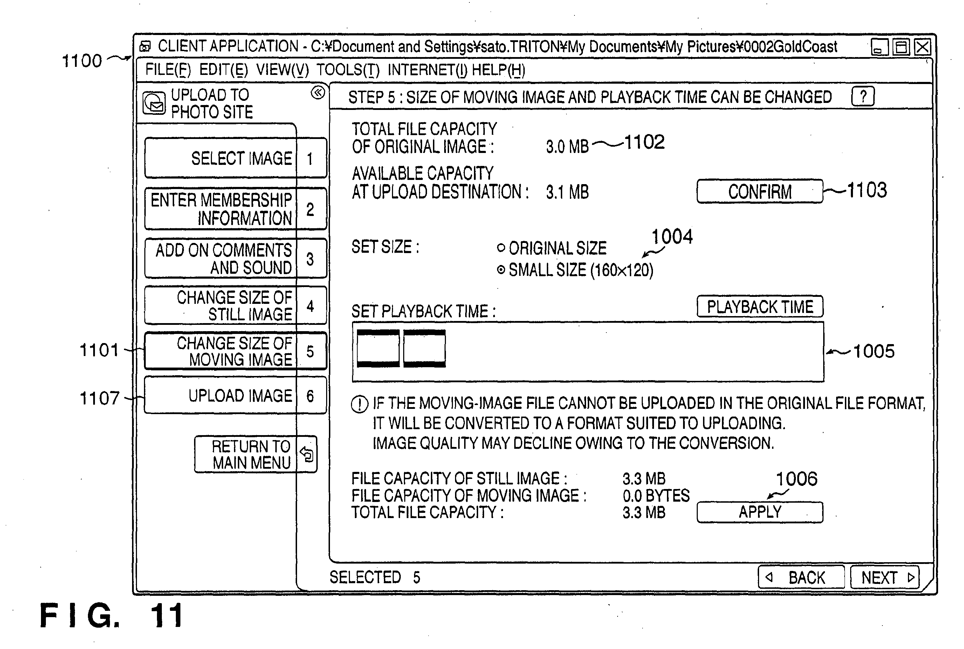

The client application 104A displays a moving-image transfer attribute setting screen 1100 (Fig. 11), which is for setting a transfer attribute of a moving image to be uploaded, on the monitor of the user PC 102A. Further, the client application 104A displays available capacity, which has been received from the photo-site server 105, as a reference numerical value and prompts the user to set an appropriate transfer attribute. The user sets a transfer attribute, such as an appropriate compression rate, in accordance with the moving-image transfer attribute setting screen 1100 (step S410).

At step S410 in this embodiment, the client application 104A further acquires one frame of a representative image of the moving-image image file. Further, the client application 104A acquires sensing-time information (which corresponds to the EXIF information of a still image) from the image file and embeds the sensing-time information in the representative image. As a result, the sensing-time information can be included in a moving-image file for transfer purposes, described later. It may be so arranged that if sensing-time information has not previously been appended to an image file, the user enters the sensing-time information by operating the user PC 102A.

In accordance with the transfer attribute set by the user at step S410, the client application 104A changes resolution and applies compression, etc., and creates a moving-image file for transfer that is different from the original image file (step S411).

In accordance with the transfer attributes set by the user, the client application 104A transfers the still-image file for transfer created at step S407, the representative image in which attribute information was embedded at step S410 and the moving-image file for transfer created at step S411 to the photo-site server 105 via the Internet 106 (step S412).

Thus, according to this embodiment, processing for embedding sensing-time information in a representative image is specially performed with regard to the image file of a moving image and the representative image is uploaded to the photo-site server 105 together with the moving image. As a result, the sensing-time information of the moving image can be transferred to the photo site via the 106 in a manner similar to that of a still image.

Though sensing-time information of a moving image usually is appended to an image file by the image input device 101, the method of appending the information is such that specs differ depending upon the manufacturer of the image input device 101 and there are cases where the information is not embedded in a representative image, depending upon the file format. With such prior art, sensing-time information is not transferred together with the image when the image has been transferred via the Internet 106 and, hence, the information is lost.

The photo-site server 105 receives the transfer image files and the representative images (step S419). The photo-site server 105 analyzes the transfer image files and representative images, reads the still images, moving images, representative images of moving images and sensing-time information, etc., and holds these in the image database 341b. Further, the photo-site server 105 updates information such as the user's available capacity and notifies the client application 104A of the fact that uploading of the images has been completed (step S420). Uploading of images is thus completed.

### <Example of operation for viewing uploaded images>

First, the user on the client side operates the user PC 102B to launch the browser (step S501). The user selects and accesses a web page of the photo-site server 105, which provides the viewing service, from a link destination prepared on a prescribed web page displayed on the monitor of the user PC 102B (step S502).

Since the photo-site server 105 of this embodiment uses a registered-member's-only system, the server authenticates the user on the client side (step S508). The photo-site server 105 refers to the managed membership information database 341a. If it is possible to provide the viewing service to the user on the client side that sought authentication, the photo site 105 transmits a menu list screen that presents this service and other services that can be received by the user (step S509).

The user PC 102B of the photo site 105 displays the menu list screen on its monitor and waits for the user to perform an operation (step S503). In a case where the user has selected the viewing service, the user PC 102B requests the photo-site server 105 for the viewing service via the Internet 106 (step S504).

The photo-site server 105 receives the image viewing request from the user PC 102B and creates a web page for image viewing (step S510 to S518). The photo-site server 105 refers to the user privilege from the membership database 341a and determines whether the database has an image that is to be viewed (step S510). If there is an image to be viewed, then the photo-site server 105 acquires the image from the image information database 341b in which images are being held (step S511).

The photo-site server 105 analyzes the information of the image acquired from the image database 341b and determines whether the image is a moving image or a still image (step S512). If the image is a still image, then the photo-site server 105 creates a thumbnail image from this still image (step S516). The photo-site server 105 further acquires the image properties, such as comments about the image and EXIF information, from the still image (step S517). The thumbnail image created at step S516 and the image properties acquired at step S517 are described in items that appear on the web page for image viewing (step S518).

If the image is a moving image, then the photo-site server 105 acquires the representative image, which was uploaded together with the moving image at step S412 in Fig. 4A, from the image database 341b (step S513). Further, the photo-site server 105 acquires the image properties, such as comments about the image and EXIF information, from the representative image (step S515). The thumbnail image created at step S514 and the image properties acquired at step S515 are described in items that appear on the web page for image viewing (step S518).

The photo-site server 105 repeats the describing of thumbnails and image properties a number of times equivalent to the number of images viewed at one time on the user PC 102B and creates the web page for viewing images (step S518). The photo-site server 105 transfers the viewing web page thus created to the browser of the user PC 102B so that the web page can be displayed (step S519).

The browser of the user PC 102B displays the viewing web page received from the photo-site server 105 via the Internet 106 (step S505). The thumbnails and properties of the images that can be viewed by the user are displayed on the viewing web page. The sensing-time information concerning moving images and thumbnails of representative images are displayed on the viewing screen. This completes the flow of processing for viewing uploaded images.

### <Example of display screen when uploading images to photo site>

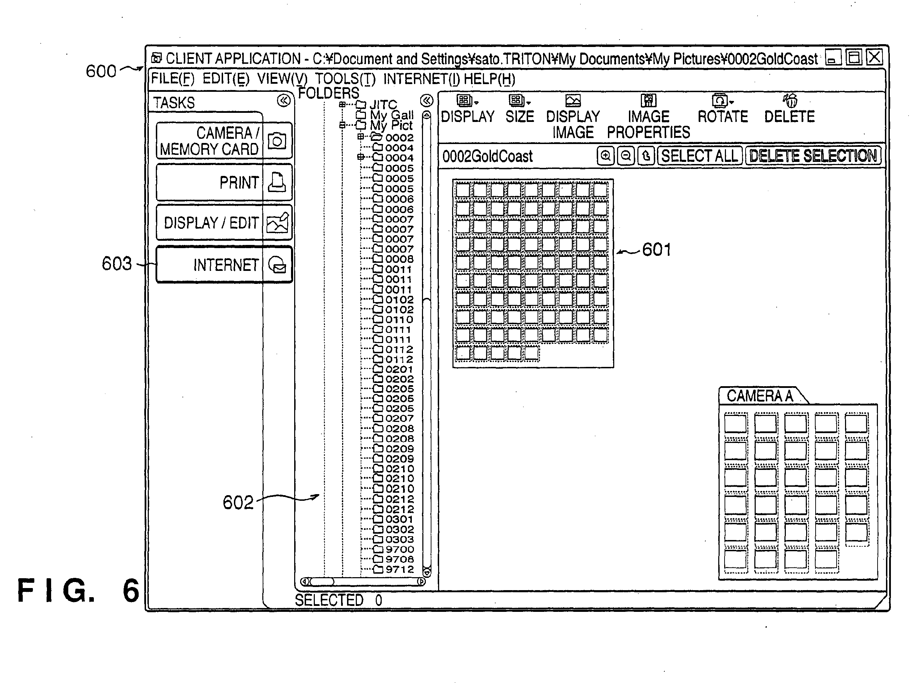

Figs. 6 to 11 illustrate examples of displays of screens associated with the client application 104A according to this embodiment. Image management by the client application 104A and the function for uploading images to the photo site will be described using the examples of the displays of Figs. 6 to 11.

The flow of display of the screens according to this embodiment is as follows:
1) an image management screen;
2) an image selection screen;
3) a log-in screen;
4) a screen for adding on information such as comments;
5) a screen for setting still-image transfer attributes;
6) a screen for setting moving-image transfer attributes; and
7) an upload performion screen.

It is assumed that an image to undergo the uploading operation has already been read into the user PC 102A or is linked thereto. How these preparations are made is not limited by the present embodiment.

### (Example of image management screen of client application 104A)

Fig. 6 illustrates an example of an image management screen of the client application 104A according to this embodiment. Images are managed on a per-folder basis and folder names and images are displayed as thumbnails in list form. With regard to moving images, thumbnails are created from the representative images uploaded together with the images and are displayed. In order to search for an image to be viewed or subjected to an operation, the user moves among the folders on a per-folder basis (602) and displays all images in the folder in the form of thumbnails (601). The user clicks on an Internet menu item (603) on the left side of the screen in order to start the image uploading operation. (Example of image selection screen of client application 104A)

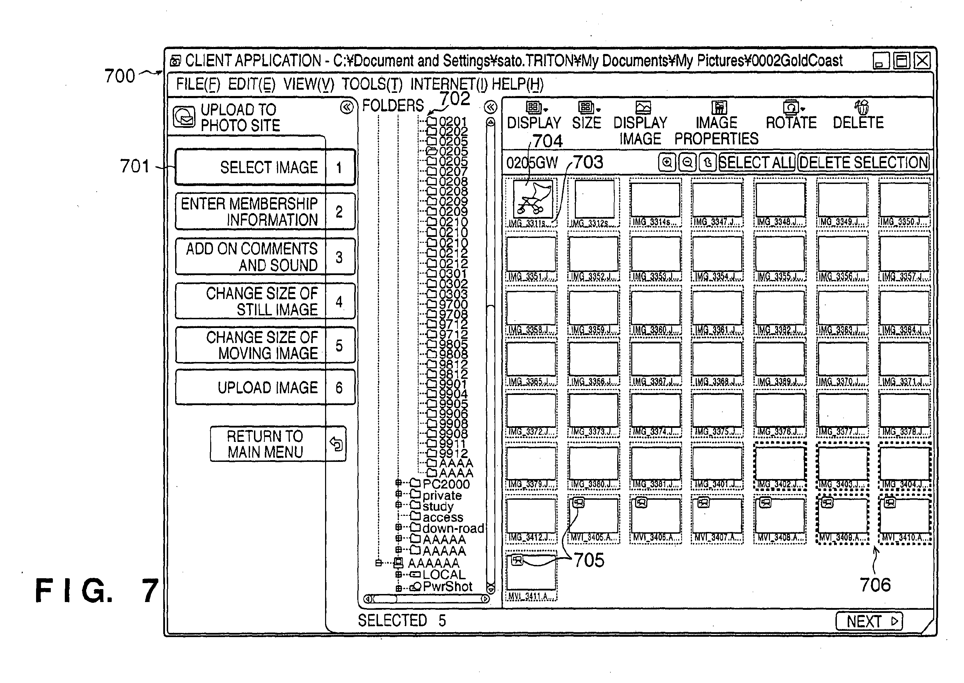

When the client application 104A starts uploading images to the photo site 105, first an image selection screen (700) shown in Fig. 7 is displayed.

The user displays the images within a folder (702), which has been selected by operating the user PC 102A, in the form of file names (703) and thumbnails (704). With regard to images within the folder (702), those in the moving-image format have an icon (705), which is indicative of a moving image, appended to the thumbnail of the image. The user operates the user PC 102A to click on an image to be uploaded to the photo site 105 from among the displayed images, thereby selecting the image. The selected image undergoes a change in the color surrounding the border of the thumbnail to thereby indicate that the image is in the selected state (706). (Example of screen for accessing photo-site server from client application 104A)

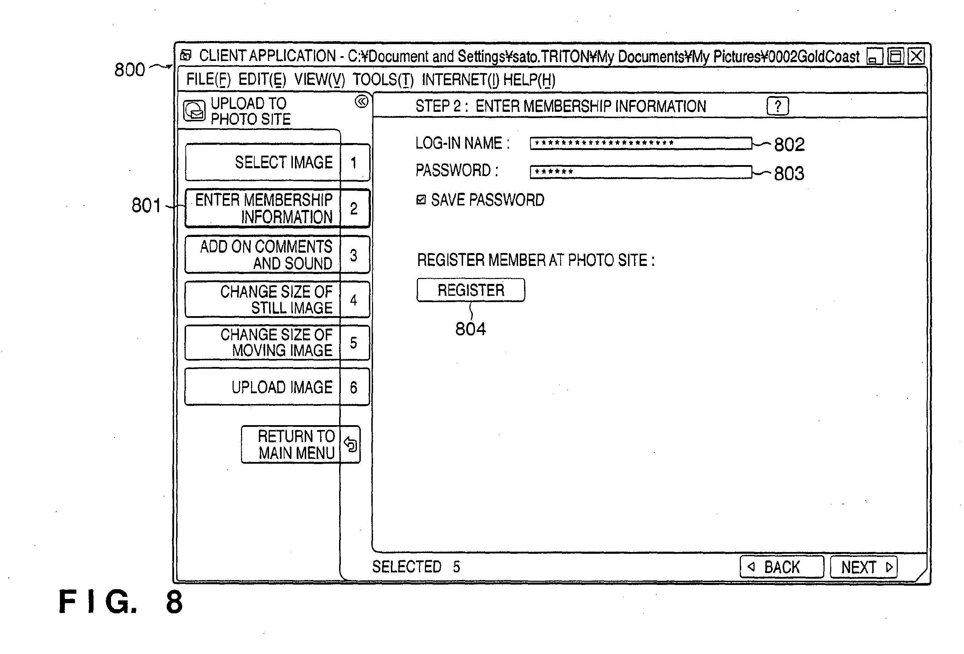

If an image to be uploaded is selected, the client application 104A displays a log-in screen (800) shown in Fig. 8 in order to allow the user to access the photo-site server 105.

The user operates the user PC 102A to enter a log-in name (802) and password (803) of which the user has already been notified, thereby seeking authentication from the photo-site server 105 via the Internet. Further, if the user has not performed membership registration with the photo site 105, then the user clicks on a member's registration list (804) in order to register membership, accesses the photo-site server 105 and performs the registration operation.

### (Example of screen for adding on comment information from client application 104A)

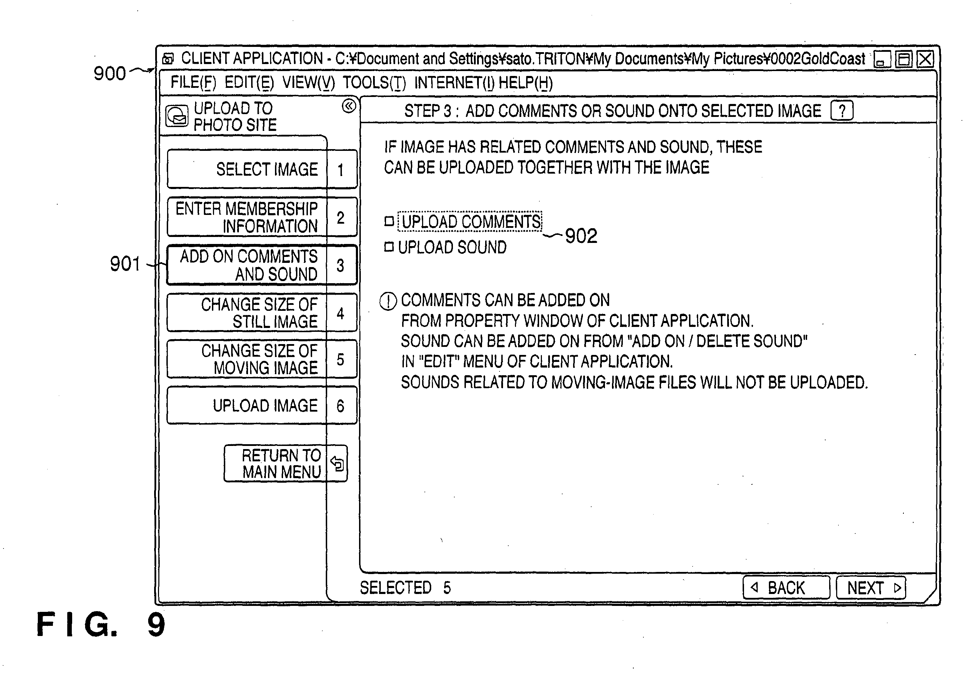

The client application 104A displays a comment-information add-on screen (900) shown in Fig. 9 in order to enter comments regarding an image when the image is uploaded to the photo-site server 105.

The user operates the user PC 102A to select whether or not to upload an image upon adding a comment or sound (902) to the image. It should be noted that whether or not the function for adding on comment information is provided or not does not constitute a limitation in this embodiment.

### (Screen for setting still-image transfer attribute in the client application 104A)

If it has been decided that a still image exists among the images selected on the image selection screen 700, the client application 104A displays the still-image transfer attribute setting screen 1000 shown in Fig. 10. Here the object is to compress the image and reduce the image size in order to shorten the required image uploading time, alleviate the load of processing by the photo-site server 105 and use less storage capacity.

The client application 104A calculates and displays the total file size of the original image to be downloaded (1002). The photo-site server 105 of this embodiment has a limited capacity for holding images. Accordingly, if a confirm button is clicked, the client application 104A accesses the photo-site server 105, calculates the available capacity and displays it (1003). Controls are displayed (1004) so that when an image is uploaded, the user may select whether to upload the image at the original file size without compression or to apply compression. In Fig. 10, the selected image is compressed according to the JPEG format. If a plurality of images have been selected, these are compressed individually. Compression makes image size large, medium or small and sets the quality of the image (1004). By operating the user PC 102A and clicking an apply button (1006), the user causes the client application 104A to perform compression of the still image and create a still-image file for transfer. The client application 104A re-calculates and displays the size of the still-image file for transfer (1005).

The method adopted in this embodiment allows the quality and size of a still image to be designated in any of three choices and compresses images collectively as JPEG files. However, it is permissible to adopt a method in which file size after compression is designated, resolution and color are converted and file format is designated followed by performing compression. Various examples of screens for setting still-image transfer attributes are conceivable in accordance with the method adopted. (Screen for setting moving-image transfer attribute in the client application 104A)

If it has been decided that a moving image exists among the images selected on the image selection screen 700, the client application 104A displays the moving-image transfer attribute setting screen 1100 shown in Fig. 11. Here the object is to shorten the required image uploading time, alleviate the load of processing by the photo-site server 105 and use less storage capacity.

The client application 104A calculates and displays the total file size of the original moving image to be downloaded (1002). The photo-site server 105 of this embodiment has a limited capacity for holding images. Accordingly, if a confirm button is clicked, the client application 104A accesses the photo-site server 105, calculates the available capacity and displays it (1103). Controls are displayed so that when an image is uploaded, the user may select whether to upload the image at the original file size without compression or to apply compression. In Fig. 11, the size of the selected image is compressed to a small, fixed size (1104). If a plurality of images have been selected, these are compressed individually. It is also possible to shorten playback time of the moving image and reduce the size thereof. If a moving image to undergo editing of playback time is selected and a playback-time button clicked, a control (1105) is displayed to actually run the moving image, cut out unnecessary portions and enable transfer only of the necessary portions.

By operating the user PC 102A and clicking an apply button (1106), the user causes the client application 104A to perform compression of the moving image and create a moving-image file for transfer. The client application 104A re-calculates and displays the size of the moving-image file for transfer (1106).

The method adopted in this embodiment designates a fixed size as the size of a moving image and then applies compression. However, it is permissible to adopt a method in which file size after compression is designated and file number or format is designated followed by performing compression. Various examples of screens (1100) for setting moving-image transfer attributes are conceivable in accordance with the method adopted.

Also, in this embodiment, the client side executes to enter moving-image transfer attribute (S410 in Fig. 4B) and create data from moving-image transfer (S411 in Fig. 4B). However, it is possible that the client side performs to transfer moving- and still-image data (S412 in Fig. 4B) without executing above step S410 or S411 while the server side executes the processing of steps S410 and S411 instead of the client side.

Further, it goes without saying that the object of the invention is attained also by supplying a storage medium (or recording medium) on which the program codes of the software for performing the functions of the foregoing embodiment have been recorded to a system or an apparatus, reading the program codes with a computer (e.g., a CPU or MPU) of the system or apparatus from the storage medium, and then performing the program codes. In this case, the program codes read from the storage medium themselves implement the novel functions of the embodiment, and the program codes per se and storage medium storing the program codes constitute the invention. Further, besides the case where the aforesaid functions according to the embodiment are implemented by performing the program codes read by a computer, it goes without saying that the present invention covers a case where an operating system or the like running on the computer performs a part of or the entire process based upon the designation of program codes and implements the functions according to the embodiment.

It goes without saying that the present invention further covers a case where, after the program codes read from the storage medium are written in a function expansion card inserted into the computer or in a memory provided in a function expansion unit connected to the computer, a CPU or the like contained in the function expansion card or function expansion unit performs a part of or the entire process based upon the designation of program codes and implements the function of the above embodiment.

In a case where the present invention is applied to the above-mentioned storage medium, program code that includes the program code corresponding to the flowchart described earlier is stored on the storage medium.

As many apparently widely different embodiments of the present invention can be made without departing from the spirit and scope thereof, it is to be understood that the invention is not limited to the specific embodiments thereof except as defined in the appended claims.

This application is a divisional application of European patent application number 04252923.0 (the "parent application"), also published under EP-A-1480439. The original claims of the parent application are repeated below in the present specification and form part of the content of this divisional application as filed.
1. A method of uploading data, comprising the steps of:
   selecting a plurality of items of data having different file formats;
   performing, to the selected items of data, processing corresponding to their file formats, respectively; and
   transmitting the selected items of data to a network together with respective results of the processing.
2. The method according to claim 1, wherein the processing is processing for embedding first attribute information, which relates to data having a first file format, in representative data extracted from the data having the first file format.
3. The method according to claim 2, wherein second attribute information has been embedded previously in data having a second file format.
4. The method according to claim 1, wherein the processing is processing for creating first thumbnail data from representative data extracted from data having a first file format.
5. The method according to claim 1, wherein the processing is processing for creating thumbnail data having a second file format.
6. The method according to claim 1, wherein the file formats include at least the Exchangeable Image File Format.
7. The method according to claim 1, wherein the processing is at least one of processing for changing resolution of the data and processing for compressing the data.
8. The method according to claim 1, wherein the file formats include at least the MPEG format or JPEG format.
9. A program executed by a computer, said program comprising the steps of:
   selecting a plurality of items of data having different file formats;
   performing, to the selected items of data, processing corresponding to their file formats, respectively; and
   transmitting the selected items of data to a network together with respective results of the processing.
10. A storage medium on which a program is stored in a form readable by a computer, said program comprising the steps of:
   selecting a plurality of items of data having different file formats;
   performing, to the selected items of data, processing corresponding to their file formats, respectively; and
   transmitting the selected items of data to a network together with respective results of the processing.
11. An information processing apparatus for uploading data comprising:
   means adapted to select a plurality of items of data having different file formats;
   means adapted to perform, to the selected items of data, processing corresponding to their file formats, respectively; and
   mean adapted to transmit the selected items of data to a network together with respective results of the processing.

## Claims

1. An image processing apparatus (102A) for processing a still image file which includes attribute information following a format of still image file and a moving image file which includes attribute information following a format of moving image file, **characterized by** comprising:
first acquiring means (104A, S410) for acquiring a representative image data from the moving image file, the representative image data being still image data;
second acquiring means (104A, S410) for acquiring attribute information following a format of moving image file included in the moving image file; and
embedding means (104A, S410) for embedding the attribute information acquired by said second acquiring means in the representative image data acquired by the first acquiring means.

2. The apparatus according to claim 1, **characterized in that** said embedding means are operable to embed the attribute information acquired by said second acquiring means in the format of still image file.

3. The apparatus according to claim 1 or 2, **characterized in that** the format of still image file includes at least the Exchangeable Image File Format.

4. The apparatus according to any one of claims 1 to 3, **characterized by** further comprising transmission means (104A, S411-S412) for transmitting the moving image file to an external apparatus, and **characterized in that** said embedding means are operable to perform a embedding process when the moving image file is a target to be transmitted to the external apparatus.

5. The apparatus according to any one of claims 1 to 4, **characterized in that** said first acquiring means are operable to acquire a scene of moving images included in the moving image file as the representative image data.

6. A method of processing a still image file which includes attribute information following a format of still image file and a moving image file which includes attribute information following a format of moving image file, **characterized by** comprising the steps of:
acquiring (S410) a representative image data from the moving image file, the representative image data being still image data;
acquiring (S410) attribute information following a format of moving image file included in the moving image file; and
embedding (S410) the acquired attribute information in the acquired representative image data.

7. A program which, when executed by a computer, causes the computer to carry out the method of claim 6.

8. A computer-readable storage medium storing the program of claim 7.
